# EUROPÄISCHE PATENTANMELDUNG

(11) **EP 3 065 152 A1**
(43) Veröffentlichungstag der Anmeldung: **07.09.2016**
(21) Anmeldenummer: 15158106.3
(22) Anmeldetag: 06.03.2015
(51) Int. Cl.: H01F 38/14, B60L 11/18

(54) **PRIMÄRTEIL EINES INDUKTIVEN LADEGERÄTS**

(71) Anmelder: Brusa Elektronik AG, 9466 Sennwald (CH)
(72) Erfinder: Die Erfindernennung liegt noch nicht vor
(74) Vertreter: Patentbüro Paul Rosenich AG

(57) **Zusammenfassung**

Ein Übertragerelement eines Primärteils oder einer Sendeeinheit für ein System zur kontaktlosen Energieübertragung umfasst ein Gehäuse (1) mit einer durch zumindest einige Auflagepunkte definierten Bodenfläche (B), eine der Bodenfläche (B) gegenüberliegenden Deckfläche (6), und diese beide Flächen (B, 6) verbindenden Seitenflächen (7). Im Gehäuse (1) befinden sich zumindest eine Primärspule (2) und eine Elektronik (3) für deren Versorgung und/oder Steuerung der oder jeder Primärspule (2).

Zumindest die Elektronik (3) ist in einem Abteil (4) des Gehäuses (1) untergebracht, welches zumindest eine Seitenfläche (4a/4b) mit zumindest einer Reihe von Kühlkaminen (8) aufweist, die von der Deckfläche (6) im Wesentlichen bis zumindest in die Höhe der Unterseite (U) des Abteils (4) reichen.

## Beschreibung

Die Erfindung betrifft ein Übertragerelement als Primärteil oder Sendeeinheit für ein System zur kontaktlosen Energieübertragung, nach dem Oberbegriff des Anspruchs 1.

Für Elektrofahrzeuge, die zumindest teilweise elektromotorisch angetrieben sind, sind Vorrichtungen zur induktiven Übertragung elektrischer Energie für die Ladung der Traktionsbatterien bekannt. Dabei wird die Energie von zumindest einer Primärspule ausserhalb des Fahrzeuges kontaktlos zu zumindest einer am oder im Fahrzeug angeordneten Sekundärspule übertragen.

Ein typischer Aufbau sieht eine Elektronik mit Lüftern für die Wandmontage vor, von welcher Hochfrequenz-Leitungen zu weiterer Elektronik am oder im Fussboden gehen, welche dann die Primärspule des unter dem Auto am oder im Fussboden, im Boden, in einer Fahrbahn od.dgl. speist.

In der DE 102011089339 A1 ist eine Vorrichtung offenbart, die ein Grundelement am Boden des Elektrofahrzeugs und eine dem Grundelement zugeordnete Sekundärspule umfasst, die mit einem Speicher für Elektroenergie energetisch koppelbar ist, wobei zumindest ein Teil der Sekundärspule, insbesondere der Spulenkern relativ zum Grundelement bewegbar gelagert ist.

Bei einer weiteren Vorrichtung zur kontaktlosen Leistungsversorgung gemäss DE 102012020364 A1 ist in einer Ebene eine Vielzahl von Primärspulen vorgesehen, die gruppenweise in einem Gehäuse angeordnet sind und denen Gruppen von Leistungsversorgungseinheitsschaltungen zugeordnet sind. Zur Unterdrückung von der Anregungsfrequenz der Primärspulen ist eine Vielzahl von Einheitscontrollern vorgesehen, die Synchronisationssignale bereitstellen.

In der WO2013/017200 ist ein elektronisches Gerät offenbart, insbesondere ein Übertragerkopf zur Versorgung des Antriebs eines zumindest teilweise elektrisch betriebenen Fahrzeuges auf Basis induktiver Energieübertragung. Dieses Gerät weist ein Gehäuse mit einer darin befindlichen Sekundärwicklung und einem integrierten Gleichrichter auf.

Die Primärseite jedoch, die aus dem Stromnetz gespeist wird und die Energie für den Betrieb und/oder das Laden des Energiespeichers der Sekundärseite zur Verfügung stellt, ist typischerweise aufgrund vieler verschiedener Baugruppen als Anordnung mehrerer getrennter Einheiten aufgebaut. Die Primärseite muss neben dem Netzanschluss noch einen oder mehrere der Baugruppen Eingangsfilter, Schutzschaltung, Gleichrichter, Leistungsfaktorkorrekturfilter, Aufwärtswandler, dann typischerweise DC/DC-Abwärtswandler, resonanter DC/AC Wandler, Hochfrequenz-Leitungen, sowie zumindest eine Primärspule aufweisen.

Eine derartige Anordnung ist auch in der US 2011/0254377 A1 offenbart. Darin ist ein System zur drahtlosen Ladung einer Batterie eines Elektrofahrzeuges beschrieben, als auch zur kontaktlosen Energieübertragung innerhalb des Fahrzeuges selbst. Die Primärspule, deren Versorgungselektronik als auch die Anbindung an ein Energieversorgungsnetz ist in separaten Baugruppen und auch baulich getrennt voneinander realisiert. Weiter offenbart die US 2011/0254377 A1 auch einen Wandler zur Ansteuerung einer Spule für die induktive Energieübertragung mit niederfrequentem Wechselstrom, bei der die Gleichstrom-Eingänge des Wandlers über einen Kondensator kurzgeschlossen sind und zu jeweils nachgeordneten, aktive gesteuerten Schaltern geführt sind, über welche die Primärspule des Energieübertragungssystems versorgt wird. Ein weiterer Ausgang der offenbarten Wandlerschaltung ist über jeweils eine Kapazität mit jeweils dem Eingang der Schaltung verbunden, deren zugeordneter Schalter gerade geöffnet ist.

Eine ähnliche Schaltung ist auch der WO 2011/151038 A1 zu entnehmen. Dieser Schaltungsvariante fehlen jedoch die Kapazitäten in der Verbindung zwischen dem ungeschalteten Eingang der Wandlerschaltung und der Sendespule des drahtlosen Energieübertragungssystems. Hingegen ist auch hier ein Kondensator vorgesehen, über den die beiden Eingänge des offenbarten Wandlers kurzgeschlossen sind.

In der EP 0814557 B1 ist ein tragbares Ladegerät offenbart, dessen Gehäuse in Form einer flachen Box vorliegt, die auf dem Boden unter dem Fahrzeug positioniert wird. Sie kann an eine genormte Netzsteckdose angeschlossen werden und enthält einen Hochfrequenzgenerator, eine Primärspule, die magnetisch koppelt mit einer Sekundärspule auf der Unterseite des Fahrzeugs. Die Box ist mit einer Führungseinrichtung für die korrekte Positionierung des Fahrzeugs ausgestattet, und bei korrekter Relativposition von Fahrzeug und Box wird ein Schalter zum Initiieren der induktiven Energieübertragung betätigt. In einer weiteren Vorrichtung zum kontaktlosen Aufladen eines Akkus gemäss DE 102004039651 A1 wird die zum Aufladen notwendige Energie von einer Energiequelle zu einer Energiesenke über ein Wechselfeld übertragen. Die Feldstärke des Wechselfeldes ist dabei grösser als eine mögliche Feldstärke bei gleichzeitiger Übertragung von Daten und Aufladeenergie. Daten werden nicht im Lademodus übertragen, sondern nur in einem ersten Betriebsmodus, weshalb der Ladevorgang schneller ablaufen soll.

Aufgabe der vorliegenden Erfindung ist es somit, den Ladevorgang bei einer induktiven Übertragung von Energie von einer Primärspule des Primärteils zu einer Sekundärspule zu verbessern und die Benutzungssicherheit beim Ladevorgang zu erhöhen.

Die Aufgabe wird durch die Merkmale des unabhängigen Anspruchs 1 gelöst. Vorteilhafte Weiterbildungen sind in den Figuren und in den abhängigen Patentansprüchen dargelegt.

Das erfindungsgemässe Übertragerelement eines kontaktlosen/induktiven Ladegeräts ist das auf dem Boden einer Garage, einer Tankstelle oder dgl. befindliche Element eines induktiven Ladegeräts, um im Betriebszustand elektrische Energie induktiv in einen Energiespeicher eines zumindest teilweise elektrisch betriebenen Kraftfahrzeugs zu übertragen.

Es umfasst ein Gehäuse mit einer durch zumindest einige Auflagepunkte definierten Bodenfläche, einer der Bodenfläche gegenüberliegenden Deckfläche, und diese beide Flächen verbindenden Seitenflächen, in oder an welchem Gehäuse zumindest eine Primärspule, eine Elektronik für die Versorgung und/oder Steuerung der oder jeder Primärspule und allenfalls eine Schnittstelle zur Energieversorgung der Elektronik untergebracht sind.

Der Ausdruck "durch zumindest einige Auflagepunkte definierte Bodenfläche" soll zum Ausdruck bringen, dass diese Fläche auch eine gedachte Ebene bzw. Fläche sein kann, wobei das Gehäuse des Übertragerelementes des Primärteils auch auf mehreren bis einer Vielzahl von Füssen oder Abstandhaltern auf dem Boden aufliegen kann.

Erfindungsgemäss ist zumindest die Elektronik in einem vorzugsweise mit Abstand oberhalb der Bodenfläche angeordneten Abteil des Gehäuses untergebracht, welches Abteil zumindest eine Seitenfläche mit zumindest einer Reihe von Kühlkaminen aufweist. Diese Kühlkamine reichen von der Deckfläche im Wesentlichen bis in die Höhe der Unterseite des Abteils und verlaufen parallel zueinander.

Eine vorteilhafte Ausführung sieht dabei weiter vor, dass die Kühlkamine noch weiter in Richtung der Bodenfläche reichen und sich insbesondere bis zu dieser Bodenfläche erstrecken.

Aufgrund der Verlustleistung der Leistungselektronik entsteht Wärme, die zu einer Erwärmung des Übertragerelementes im Betriebszustand führt. In den Kühlkaminen wird die darin befindliche Luft erwärmt, wodurch eine Konvektionströmung in Gang gesetzt wird, welche durch den Kamineffekt (rundum geschlossenes Gebilde (Kamin) ermöglicht einen Druckunterschied zwischen Innen- und Aussenbereich) verstärkt wird, die immer neue Kühlluft in die Kamine und vorbei am erwärmten Bereich des Übertragerelementes saugt. Durch diese von der Bodenplatte her kommende, vorbeiströmende Luft wird die durch die Verlustleistung entstandene Wärme besser abgeführt als bei bisherigen Konstruktionen, was einer zu starken, für elektronische bzw. elektrische Elemente unzulässigen Erwärmung entgegenwirkt.

Dabei umfasst ein Kamin gemäss der vorliegenden Erfindung - abweichend von der streng technischen Definition - auch einen beliebig ausgeformten Einströmbereich mit zumindest einer beliebig orientierten Einströmöffnung und/oder einen beliebig geformten Ausströmbereich mit zumindest einer beliebig orientierten Ausströmöffnung. Typischerweise weist ein Kühlkamin im Sinn dieser Anmeldung zumindest eine im vertikal unteren Abschnitt der Passage für die Kühlluft angeordnete Zufuhröffnung für die Kühlluft auf, welche den Kamin dann nach oben hin durchströmt und am vertikal oberen Ende des Kamins in die Umgebung abgegeben wird. Die Einströmöffnung des Kamins kann in prinzipiell beliebiger Orientierung mit einer Achse zwischen im Wesentlichen radial bzw. axial zur Längsachse des Kamins ausgerichtet sein und einen Zustrom der Kühlluft aus einer zur Längsachse des Kamins radialen und/oder axialen Richtung ermöglichen.

Bevorzugt reicht zumindest ein Kühlkamin oder eine Reihe von Kühlkaminen an einer der Mitte des Gehäuses zugewandten Seitenfläche des Abteils bis in eine Höhe zwischen der Deckfläche und der Unterseite des Abteils. Vorzugweise reichen die Kühlkamine bis ganz zur Bodenfläche. Eine alternative oder auch kumulative vorteilhafte Ausführungsform ist dadurch gekennzeichnet, dass zumindest einer der Kühlkamine durch zumindest eine Einströmöffnung versorgt wird, die sich im Bereich zwischen der Höhe der Unterseite des zu kühlenden Abteils und der Bodenfläche des Gehäuses befindet. Damit wird eine weiter verbesserte Kühlwirkung erzeugt, indem zwei vorzugsweise gegenüberliegende Seiten des im Betrieb besonders hoch erwärmten Bereiches gekühlt werden. Vorzugsweise erstrecken sich auch diese Kühlkamine bis ganz zur Unterseite hin, so dass die Konvektionsströmung optimiert und eine möglichst lange Strecke für den Wärmetausch vorliegt.

Gemäss einem weiteren Ausführungsbeispiel der Erfindung ist vorgesehen, dass alternativ oder allenfalls auch kumulativ dazu zumindest einer der Kühlkamine durch zumindest eine Einströmöffnung versorgt wird, die sich im Bereich zwischen der Höhe der Unterseite und der Bodenfläche befindet. Damit beginnt die Umströmung und der Wärmetausch des im Betrieb erwärmten Bereiches des Gehäuses bereits an dessen Unterseite, so dass die gekühlte Oberfläche weiter vergrössert und die Wärmeabfuhr damit weiter verbessert ist.

Bevorzugt reicht zumindest ein Kühlkamin oder eine Reihe von Kühlkaminen an einer, einer der Seitenflächen des Gehäuses zugewandten Seitenflächen des Abteils von der Deckfläche bis in eine Höhe zwischen der Deckfläche und der Unterseite des Abteils. Vorzugsweise erstreckt sich dieser Kühlkamin oder diese Reihe von Kühlkaminen bis ganz zur Bodenfläche hin. Der oder jeder Kamin an der Aussenseite des Gehäuses wirkt sowohl als Führung für die Konvektionsströmung als auch als Wärmeabstrahlfläche in die Umgebung des erfindungsgemässen Übertragerelementes, was die Kühlwirkung optimiert und die bestmögliche Wärmeabfuhr gewährleistet.

Alternativ oder kumulativ kann ein Kühlkamin oder eine Reihe von Kühlkaminen aus dem zwischen der Unterseite des Abteils und der Bodenflächen befindlichen Zwischenraum mit der Kühlluft versorgt werden. Damit beginnt die Umströmung und der Wärmetausch des im Betrieb erwärmten Bereiches des Gehäuses bereits an dessen Unterseite, so dass die gekühlte Oberfläche weiter vergrössert und die Wärmeabfuhr insbesondere durch die Kombination von Konvektionsströmung zum Vorbeisaugen von Kühlluft als auch der Wärmeabstrahlung über das Material der Kühlkamine weiter verbessert ist.

Eine erweiterte Ausführungsform des erfinderischen Konzepts der Kühlkamine ist dadurch gekennzeichnet, dass zumindest an der der Aussenseite des Gehäuses zugewandten Seitenfläche des Abteils sich zumindest eine zweite Reihe von einem Kühlkamin anschliesst. Eine vorteilhafte Variante sieht dabei weiter vor, dass diese sich ebenfalls von der Deckfläche im Wesentlichen bis zumindest zur Unterseite des Abteils reichen. Die Kamine verlaufen auch hier im Wesentlichen vertikal und parallel zueinander sowie vorzugsweise auch parallel zu der benachbarten Reihe von Kühlkaminen.

Eine weitere Ausführungsform der Erfindung ist dadurch gekennzeichnet, dass zumindest an der der Aussenseite des Gehäuses zugewandten Seitenfläche des Abteils die Kühlkamine unterschiedlicher Reihen sich im Wesentlichen zwischen der Höhe der Unterseite des Abteils und der Bodenfläche zu einem beiden Reihen gemeinsamen Zuluftabschnitt vereinigen. Dieser gemeinsame Kaminabschnitt sorgt für eine Vergleichmässigung der Strömung der Kühlluft vor dem Eintritt in die vertikalen Abschnitte der Kühlkamine und damit zu einer verbesserten Strömungscharakteristik durch die Kamine und damit zu einer Verbesserung der Wärmeabfuhr.

Gemäss einer weiteren Ausführungsform der Erfindung ist vorgesehen, dass zumindest einige Kühlkamine oder der gemeinsame Zuluftabschnitt mit einer nach aussen hin offenen Einströmöffnung verbunden sind. Gegebenenfalls kann für weiter innen im Gehäuse angeordnete Kamine, die weiter von den Seitenflächen entfernt sind, ein die Einströmöffnung mit dem unteren Ende der Kamine verbindender Kaminabschnitt vorgesehen sein, der im Wesentlichen parallel zur Bodenfläche verläuft. Damit kann die kühlste verfügbare Luft mit dem geringsten Strömungswiderstand zur Wärmeabfuhr eingesaugt werden, so dass auch die durch die Kamine verstärkte Konvektionsströmung leicht in Gang kommt und aufrecht erhalten werden kann.

Erfindungsgemäss kann auch vorgesehen sein, dass Führungswände vom untersten Bereich der am nächsten der Aussenseite des Gehäuses liegenden Kühlkamine bis zumindest zum untersten Bereich der benachbarten Reihe von Kühlkaminen reichen. Vorzugsweise reichen diese Führungswände bis unter die Unterseite des Abteils, gegebenenfalls auch bis hin zu der Reihe von Kühlkaminen an der der Mitte des Gehäuses zugewandten Seite des Abteils. Diese Führungswände überbrücken den Abstand zwischen einer Unterkante der Kühlkamine bzw. der Unterseite des Abteils bis hin zur Bodenfläche. Damit kann eine verbesserte Strömungsführung und Verteilung der Kühlluft entsprechend den baulichen Anforderungen bewerkstelligt werden.

Bevorzugt ist dabei vorgesehen, dass die Führungswände im zentralen Abschnitt des Abteils die grösste Längserstreckung aufweisen und vorzugsweise bis hin zum am nächsten der Mitte des Gehäuses liegenden Kühlkamin der gegenüberliegenden Seite des Abteils reichen. Weiters kann sich vorzugsweise die Längserstreckung der Führungswände zu den Rändern des Abteils umso mehr vermindert, je näher die Führungswand zum Rand des Abteils liegt. Ein Anteil der Kühlluft wird dadurch bis unter den zu kühlenden Bereichs des Übertragerelementes geleitet, kann dort bereits seine Kühlwirkung entfalten, und wird anschliessend an den Seiten des Abteils durch die Kühlkamine an die Deckfläche und weiter die Umgebung abtransportiert.

Dabei vermindert sich die Längserstreckung der Führungswände zu den Rändern des Abteils umso mehr, je näher die Führungswand zum Rand des Abteils liegt. Diese Auslegung ergibt die gleichmässigste Kühlwirkung über die Bodenfläche des zu kühlenden Gehäusebereichs.

Eine weitere erfindungsgemässe Ausführungsform ist dadurch gekennzeichnet, dass zumindest eine oder jede Seitenfläche des Gehäuses, an der Kühlkamine vorgesehen sind, zumindest über einen Teil ihrer Höhe zwischen Bodenfläche und Deckfläche schräg nach aussen hin abfallend verläuft und die äussere Begrenzung der an diese Seitenfläche angrenzenden Kühlkamine entsprechend diesem schrägen Verlauf folgt oder durch die Innenwandung des schrägen Teils der Seitenfläche gebildet ist.

Eine bevorzugte Ausführungsform sieht vor, dass von der Unterseite des Abteils Stützen in Richtung Bodenfläche hin ausgehen. Damit ist unterhalb der zu kühlenden Bereiche des Übertragerelementes Freiraum für die Führung von Kühlluft geschaffen, die dann auch gleich die Unterseite des zu kühlenden Bereichs des Gehäuses umströmen und kühlen kann. Vorzugsweise ist dazu eine Vielzahl von Stützbeinen mit vorzugsweise einer Querdimension in der Grösse der Dicke der Führungswände vorgesehen, so dass eine selbst bei Auffahren eines Fahrzeuges ausreichende Tragwirkung bei gleichzeitiger geringster Strömungsbehinderung erreicht ist. Besonders vorteilhaft ist eine derartige Ausführungsform bei einem Ausführungsbeispiel der Erfindung, bei welchem an zumindest zwei Seitenflächen des Gehäuses Öffnungen vorgesehen sind und daran anschliessend sich durch Führungswände begrenzte Passagen bis hin zum Abteil erstrecken, wobei an zumindest einer weiteren Seite Kühlkamine angeordnet sind und sich bis vorzugsweise in die Höhe der Unterseite des Abteils erstrecken. Damit lässt sich eine besonders gute Kühlwirkung durch verbesserte Verteilung und Strömungsleitung der angesaugten Kühlluft erzielen.

Gemäss einer anderen Variante der Erfindung ist ein Teil der Führungswände von den Passagen ausgehend unter dem Abteil bis zumindest in die Nähe der Kühlkamine an einer anderen Seite des Abteils verlängert, unter Bildung von verbreiterten Sammel-Passagen, die eine ganze Gruppe von Passagen mit dem unteren Ende zumindest eines Kühlkamins, vorzugsweise einer Gruppe von Kühlkaminen, verbindet. In den Sammel-Passagen kann eine Strömungsberuhigung und Strömungsvergleichmässigung erfolgen, welche die Umströmung der zu kühlenden Bereiche des Gehäuses des Übertragerelementes verbessert. Gleichzeitig wirken die Führungswände unter dem Gehäuse als Stützelemente, welche die Überfahrsicherheit des Gehäuses auch bei hohen mechanischen Belastungen gewährleisten.

Um ein grösseres Volumen zur Unterbringung von Leistungselektronik und anderen elektronischen bzw. elektrischen Bauteilen zur Verfügung zu haben, kann das Abteil, insbesondere jenes für Leistungselektronik, entlang einer oder mehr Seitenfläche(n) des Gehäuses verlaufen. Für eine gute Kühlung dieses vergrösserten Volumens ist an zumindest einer Seitenfläche zumindest eine Reihe von Kühlkaminen angeordnet. Vorteilhafterweise sind Kühlkamine an zwei oder mehrere Seitenflächen des Abteils vorgesehen.

Gemäss einer besonders bevorzugten Ausführungsform der Erfindung ist vorgesehen, dass auch die Primärspule in einem mit Abstand oberhalb der Bodenfläche angeordneten Abteil des Gehäuses untergebracht ist, welches Abteil innerhalb der Primärspule zumindest einen Kühlkamin aufweist, der von der Deckfläche im Wesentlichen bis zur Unterseite des Abteils reicht und im Wesentlichen vertikal verläuft. Da im Betrieb auch die Primärspule erwärmt wird und eine gute Kühlung dieses Bauteils von Vorteil ist, wird zur verbesserten Kühlung durch vorbeiströmende Kühlluft diese Kühlluft durch den zentralen Bereich innerhalb des Umfanges der Primärspule geleitet. Dieser Bereich ist üblicherweise von den kühlen Seiten weit entfernt, und erst durch die Kühlung an der Innenseite mittels des erfindungsgemässen zentralen Kühlkamins kann eine verbesserte Kühlung im gesamten Spulenbereich erzielt werden.

Um die Wärmeproduktion im Betrieb über einen grösseren Bereich des Gehäuses des Übertragerelementes zu verteilen und damit auch die Kühlung zu erleichtern, liegt vorzugsweise das Abteil für die Elektronik seitlich neben dem Bereich für die zumindest eine Primärspule. Eine weitere Verbesserung der Kühlwirkung ist dabei zu erzielen, wenn eine Mehrzahl von Kühlkaminen in ihren von der Deckfläche nach unten hin ausgehenden Abschnitten getrennt sind und sich im Wesentlichen in Höhe der Unterseite des Abteils zu einem gemeinsamen Kaminabschnitt vereinigen.

Das Einströmen von Kühlluft mit geringster Temperatur und damit bester Kühlwirkung sowie die bestmögliche Umströmung der Primärspule ist bei einer Ausführungsform zu erreichen, bei welcher zumindest einer der Kühlkamine innerhalb der Primärspule, vorzugsweise der gemeinsame Zuluftabschnitt mehrerer Kühlkamine, von einer oder mehreren Einströmöffnungen gespeist ist.

Auch hier ist einen bevorzugte Ausführungsform dadurch gekennzeichnet, dass Einströmöffnungen im Bereich der äusseren Seitenflächen des Gehäuses angeordnet und über im Wesentlichen parallel zur Bodenfläche verlaufende Passagen mit den Kühlkaminen bzw. dem gemeinsamen Zuluftabschnitt verbunden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 schematisch ein erfindungsgemässes Übertragerelement für ein Primärteil eines Systems zur induktiven Energieübertragung in einer Ansicht von schräg oben;
Fig. 2 einen vereinfachten Schnitt durch die linke Seite (Elektronikbereich und Teil des Bereichs der Primärspule) des Übertragerelementes der Fig. 1;
Fig. 3 eine Ansicht von schräg oben eines Elektronikbereichs des Primärteils eines Übertragerelementes (ohne Primärspule) gemäss einer anderen Ausführungsform mit zusätzlichen Kaminen;
Fig. 4 eine Ansicht von schräg unten auf den Elektronikbereich der Fig. 2;
Fig. 5 eine Ansicht von schräg oben auf ein Gehäuseabteil für ein Übertragerelement gemäss einer weiteren Ausführungsform (mit offenem Elektronikgehäuse);
Fig. 6 eine Ansicht auf den Elektronikbereich der Fig. 5 von schräg unten,
Fig. 7 eine Ansicht von schräg unten auf eine weitere erfindungsgemässe Ausführungsform eines ElektronikGehäuses (1) für ein Übertragerelement.
Fig. 8 eine schematische Ansicht von schräg oben auf ein weiteres Ausführungsbeispiel eines erfindungsgemässen Übertragerelementes mit Kühlkamin innerhalb der Primärspule; und
Fig. 9 eine schematische Ansicht von schräg oben auf ein weiteres Ausführungsbeispiel mit mehreren Kühlkaminen innerhalb der Primärspule.

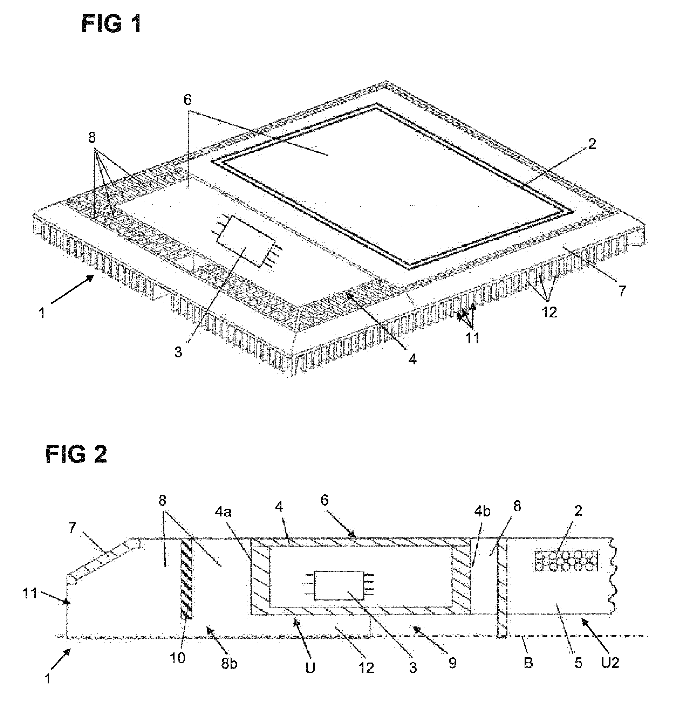

Die Zeichnungsfiguren zeigen ein vorzugsweise überfahrfestes Übertragerelement - oder wesentliche Gehäuseteile dafür - für die Primärseite eines Ladesystems zur induktiven Übertragung von Energie, insbesondere zum Laden der Batterien von zumindest teilweise elektrisch betriebenen Fahrzeugen. Von einer beispielsweise rahmenförmigen Primärspule 2 wird die Energie zu einer Sekundärspule am Fahrzeug übertragen. Die Primärspule 2 wird von einer Leistungselektronik 3 im Übertragerelement 1 versorgt, welche in einem vorzugsweise von der Primärspule 2 separaten Abteil 4 untergebracht ist, wie in Fig. 1 teilweise symbolisch dargestellt ist.

Das Gehäuse 1 des Übertragerelementes kann vollflächig am Boden unterhalb des Fahrzeuges aufliegen oder auch nur auf einigen eng begrenzten Auflagepunkten bzw. Auflagelinien, welche dann eine symbolische Bodenfläche B definieren. Dieser allenfalls symbolischen Bodenfläche B gegenüber liegt die nach oben hin ausgerichtete Deckfläche 6. An beide Flächen schliessen sich am äusseren Umfang des Übertragerelementes Seitenflächen 7 an, bei rundem Gehäuse 1 ist es nur eine Seitenfläche 7, wobei diese Seitenflächen 7 typischerweise zur Deckfläche 6 zulaufend abgeschrägt sind. Die Höhe des Übertragerelementes ist typischerweise gering gegenüber den beiden anderen Dimensionen. Es besteht bevorzugt aus einem leichtmetallischen Werkstoff oder einem wärmebeständigen und mechanisch belastbaren Kunststoff.

Die Primärspule 2 kann quadratisch oder rechteckförmig ausgebildet sein, vorzugsweise mit abgerundeten Eckbereichen, aber auch im Wesentlichen gänzlich abgerundete, insbesondere kreisförmige Spulengeometrien sind möglich. Wenn notwendig können auch gänzlich unregelmässige geometrischen Formen vorgesehen sein. Die Primärspule 2 ist bevorzugt in einem separaten Abteil 5 des Übertragerelementes, vorzugsweise nahe der oberen Deckfläche, untergebracht, allenfalls auch in einer Aussparung an der Oberseite des Übertragerelementes 1.

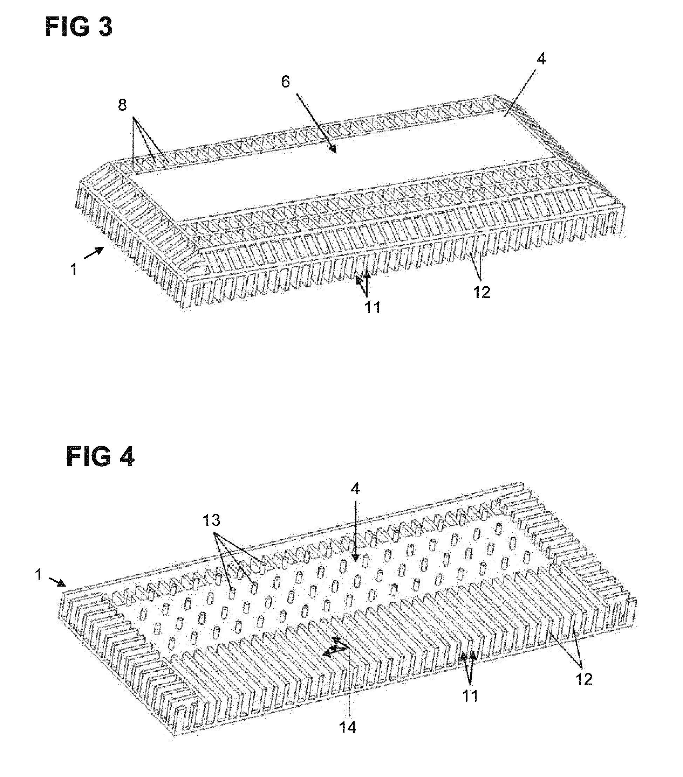

Die Elektronik 3 zur Versorgung der Primärspule 2 und zur Steuerung des Ladevorganges ist in einem Abteil 4 innerhalb des Gehäuses 1 untergebracht, das sich vorzugsweise in einem gewissen Abstand oberhalb der Bodenfläche B befindet. Dies ist insbesondere in Fig. 3 deutlich zu erkennen. Auch das Gehäuse 5 der Primärspule 2 ist vorzugsweise etwas oberhalb der Bodenfläche B angeordnet, wobei dessen Unterseite U2 nicht notwendigerweise aber vorteilhafterweise in gleicher Höhe wie die Unterseite U des Abteils 4 liegt. Weiters weist das Abteil 4 an zumindest einer seiner Seitenflächen 4a bzw. 4b und/oder den zwei weiteren Seiten, zumindest eine Reihe von Kühlkaminen 8 auf, welche von der Deckfläche 6 im Wesentlichen bis zur Unterseite U reichen und im Wesentlichen vertikal und parallel zueinander sowie vorzugsweise auch parallel zu den Seitenwänden 4a bzw. 4b des Abteils 4 verlaufen. Zumindest ein Kühlkamin 8 an einer der Mitte des Gehäuses des Übertragerelementes 1 zugewandten Seitenfläche 4b des Abteils 4 erstreckt sich von der Deckfläche 6 bis vorzugsweise in die Höhe der Unterseite U des Abteils 4. Vorzugsweise gilt das für alle Kühlkamine 8.

Dabei umfasst ein Kühlkamin 8 im Sinn der gegenständlichen Anmeldung nicht nur den im Wesentlichen vertikalen Abschnitt, der sich entlang des zu kühlenden Abteils 4 erstreckt, sondern auch allfällige weiter nach oben oder auch nach unten gezogene Abschnitte. Diese den Kühlkamin im strengen technischen Sinn verlängernden Abschnitte können den vertikalen Abschnitt axial verlängern und dabei allenfalls auch abweichend von der axialen Ausrichtung orientierte Einströmöffnungen und/oder Ausströmöffnungen aufweisen, bis hin zu radial zur Längsachse des Kühlkamins 8 orientierte Öffnungen. Dem vertikalen Abschnitt des Kühlkamins 8 können sich aber auch ein beliebig ausgeformter Einströmbereich und/oder ein beliebig geformter Ausströmbereich anschliessen.

Dabei ist es besonders vorteilhaft, wenn sich zumindest ein Kühlkamin 8 an einer der Mitte des Gehäuses 1 zugewandten Seitenfläche 4b bis zur Unterseite U des Abteils 4 erstreckt und über zumindest eine untere Einströmöffnung aus einem sich zwischen der Unterseite U und der Bodenfläche B befindlichen Zwischenraum 9 mit der Kühlluft versorgt wird. In gleicher Weise ist es vorteilhaft, wenn zumindest ein Kühlkamin 8 an einer der Aussenseite des Gehäuses 1 des Übertragerelementes 1 zugewandten Seitenfläche 4a des Abteils 4 ebenfalls bis in eine Höhe der Unterseite U des Abteils 4 reicht.

Besonders vorteilhaft ist eine Ausführungsform des Übertragerelementes 1, bei dem sich der Kühlkamin 8 oder die Gruppe der Kühlkamine 8 an der der Aussenseite zugewandten Seitenfläche 4a des Abteils 4 ebenfalls bis zur Unterseite U des Abteils 4 erstreckt und ebenso wie oben erläutert aus dem Zwischenraum 9 unterhalb des Abteils 4, begrenzt zwischen der Unterseite U des Abteils 4 und der Bodenfläche B, mit der dann der vertikale Abschnitt des Kühlkamins 8 mit aufsteigender Kühlluft versorgt wird.

Wie in den Fig. 1, 3, 8 und 9 dargestellt ist, kann zumindest an der der Aussenseite des Gehäuses 1 des Übertragerelementes 1 zugewandten Seitenfläche 4a des Abteils 4 für die Elektronik 3 zumindest eine zweite Reihe von Kühlkaminen 8 vorgesehen sein. Auch diese zusätzlichen Kühlkamine reichen im Wesentlichen von der Deckfläche 6 im Wesentlichen bis zur Höhe der Unterseite U des Abschnitts 4. Sie sind, wie die unmittelbar am Abteil 4 angrenzenden Kühlkamine 8 im Wesentlichen vertikal und verlaufen parallel zueinander sowie vorzugsweise zu der benachbarten Reihe von Kühlkaminen 8. Auch drei oder mehrere parallele Reihen von Kühlkaminen 8 können bei Bedarf und ausreichendem Platzangebot vorgesehen sein.

Die Trennung der Kühlkamine 8 unterschiedlicher Reihen ist zumindest an der der Aussenseite des Gehäuses 1 zugewandten Seitenfläche 4a des Abteils 4 derart ausgeführt, dass die Kühlkamine 8 unterschiedlicher Reihen im von der Deckfläche 6 nach unten hin ausgehenden Abschnitt durch eine Trennwand 10 voneinander abgetrennt sind. Diese Trennwand endet aber vorzugsweise in einer der Unterseite U des Abteils 4 entsprechenden Höhe über der Bodenfläche B, so dass sich die Kühlkamine 8 der benachbarten Reihen am unteren Ende der Trennwand 10 und unterhalb davon zu einem gemeinsamen Kaminluftzuführungsabschnitt 8b vereinigen (siehe dazu Fig. 3).

Damit die Kühlluft zur Durchströmung der Kühlkamine 8 und damit zur Kühlung des Abteils 4 einströmen kann, sind Einströmöffnungen 11 vorgesehen. Zumindest die am nächsten einer Seitenfläche 7 des Gehäuses (1) liegenden Kühlkamine 8 weisen unter denselben nach aussen hin offene Einströmöffnung 11 auf.

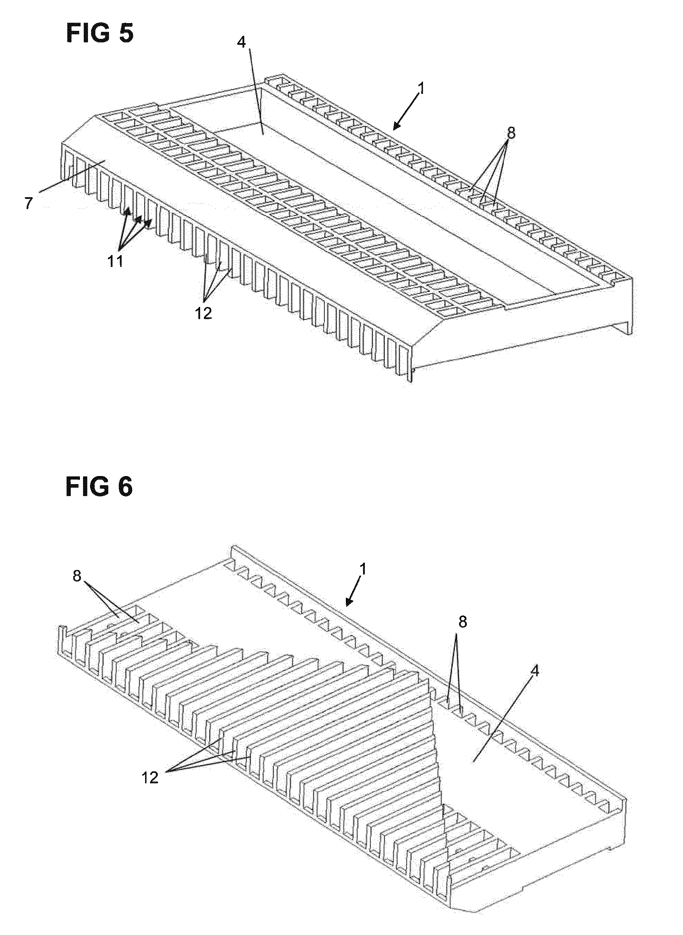

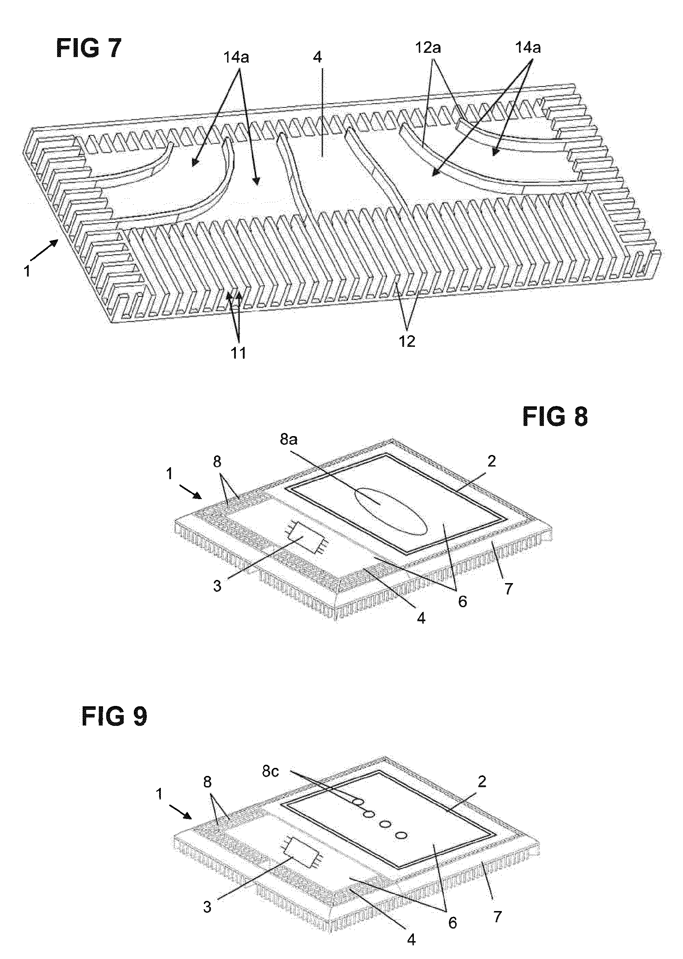

In Fig. 4 bis Fig. 7 gut zu erkennen sind vorteilhafterweise vorgesehene Führungswände 12 bzw. 12a, die vom untersten Bereich der am nächsten der Aussenseite des Gehäuses 1 des Übertragerelementes 1 liegenden Kühlkamine 8 bis zumindest zum untersten Bereich der benachbarten Reihe von Kühlkaminen 8 reichen. Für die Kühlung des Abteils 4 besonders vorteilhaft ist eine Ausführungsform, bei welcher diese Führungswände 12 bis unter die Unterseite U des Abteils 4 reichen. Gegebenenfalls können diese Führungswände 12 auch bis hin zu der Reihe von Kühlkaminen 8 an der der Mitte des Gehäuses 1 des Übertragerelementes 1 zugewandten Seite des Abteils 4b reichen, wie insbesondere in den Fig. 6 und 7 dargestellt ist. Diese Führungswände 12 überbrücken vorzugsweise über ihre gesamte Länge den Abstand zwischen einer Unterkante der Kühlkamine 8 bzw. der Unterseite U des Abteils bis hin zur Bodenfläche B.

Bei dem in Fig. 6 dargestellten Ausführungsbeispiel weisen die Führungswände 12 im zentralen Abschnitt des Abteils 4 die grösste Längserstreckung auf. Sie reichen vorzugsweise bis hin zum am nächsten der Mitte des Gehäuses 1 liegenden Kühlkamin 8 auf der Seite 4b, können sich sogar darüber hinaus erstrecken, vorzugsweise bis über die gesamte Breite des Abteils 4. Dabei ist bevorzugt vorgesehen, dass sich die Längserstreckung der Führungswände 12 zu den Rändern des Abteils 4 hin umso mehr vermindert, je näher die Führungswand 12 dem Rand des Abteils 4 liegt. Damit ergibt sich bei stetiger Längenabnahme der Führungswände 12 die in Fig. 6 dargestellte Konstruktion mit dreiecksförmigem Verlauf der Einhüllenden der Enden der Führungswände 12.

Entsprechend der bereits zu Anfang erläuterten Konstruktion des Übertragerelementes kann auch eine oder jede Seitenfläche 7 des Gehäuses 1 des Übertragerelementes, an der Kühlkamine 8 vorgesehen sind, zumindest über einen Teil ihrer Höhe zwischen Bodenfläche B und Deckfläche 6 schräg nach aussen hin abfallend verlaufen. Dabei folgt die äussere Begrenzung der an diese Seitenfläche 7 angrenzenden Kühlkamine 8 diesem schrägen Verlauf. Auch könnte die Innenwandung des schrägen Teils der Seitenfläche 7 die Begrenzung der Kühlkamine 8 bilden, wie in den Fig. 1, 5, 8 und 9 dargestellt ist.

Eine weitere Ausführungsform sieht vor, dass zumindest an zwei Seitenflächen des Gehäuses 1 Öffnungen 11 vorgesehen sind und daran anschliessend sich durch Führungswände 12 begrenzte Passagen 14 bis vorzugsweise hin zum Abteil 4, bis darunter oder darüber hinaus erstrecken, wobei an zumindest einer weiteren Seite 4b Kühlkamine 8 angeordnet sind und sich bis vorzugsweise von der Deckfläche in die Höhe der Unterseite U des Abteils 4 erstrecken. Dabei können auch wie in Fig. 4 zu erkennen ist von der Unterseite U des Abteils 4 mehrere Stützen 13 in Richtung Bodenfläche B hin ausgehen. Vorzugsweise ist das eine Vielzahl von Stützbeinen mit vorzugsweise einer Querdimension in der Grösse der Dicke der Führungswände 12.

Wie in Fig. 7 zu erkennen ist, könnte auch ein Teil 12a der Führungswände 12 von den Passagen ausgehend unter dem Abteil 4 bis hin zu den Kühlkaminen 8 an der weiteren Seite des Abteils 4b verlängert sein. Dadurch werden zwischen den verlängerten Abschnitten 12a der Führungswände 12 verbreiterte Sammel-Passagen 14a definiert, die eine ganze Gruppe von Passagen 14 mit dem unteren Ende zumindest eines Kühlkamins 8, vorzugsweise einer Gruppe von Kühlkaminen 8, verbindet.

Ein Abteil 4, insbesondere für Leistungselektronik 3, könnte auch entlang einer oder mehr Seitenfläche(n) des Gehäuses 1 des Übertragerelementes verlaufen. Auch bei einer derartigen, zum Beispiel L-förmigen Ausführung des Gehäuses 1 ist vorzugsweise umlaufend, an zumindest den äusseren Seitenflächen 4a zumindest eine Reihe von Kühlkaminen 8 angeordnet.

In ähnlicher Weise wie zuvor für ein Abteil 4 für die Leistungselektronik 3 beschrieben, kann auch die Primärspule 2 in einem mit Abstand oberhalb der Bodenfläche B angeordneten Abteil 5 des Gehäuses 1 untergebracht sein. Dieses Abteil 5 weist vorzugsweise innerhalb der Primärspule 2 zumindest einen Kühlkamin 8a auf, der sich ebenfalls wie die übrigen Kühlkamine 8 von der Deckfläche 6 im Wesentlichen bis in die Höhe nahe der Unterseite des Abteils 5 also vorzugsweise bis hin zu einer Höhe der Unterseite U2 erstreckt. Der Kühlkamin 8a, oder eine Mehrzahl von Kühlkaminen 8a, verläuft im Wesentlichen vertikal und auch vorzugsweise parallel zu den Kühlkaminen 8 des Abteils 4. Ausserhalb der Primärspule 2 können an deren Abteil 5 ebenfalls Kühlkamine 8c vorgesehen sein, für deren Ausführung, Anordnung und weitere Merkmale die bislang gemachten Ausführungen in gleicher Weise gelten. So kann, wie insbesondere in den Zeichnungsfiguren 1, 8 und 9 dargestellt ist, ein Übertragerelement mit zwei nebeneinanderliegenden Abteilen 4, 5 für die Elektronik 3 sowie für die Primärspule 2 vorgesehen sein, deren vorzugsweise seitlich aneinander angrenzenden Abteile 4, 5 von einem umlaufenden Band von Kühlkaminen 8 bzw. 8c umgeben sind.

Eine Mehrzahl von Kühlkaminen 8a im Inneren der Primärspule 2 wird vorzugsweise parallel zueinander ausgerichtet sein. Sie können sich im Wesentlichen in Höhe der Unterseite U des Abschnitts 5 zu einem gemeinsamen Kaminluftzuführungsabschnitt vereinigen. Vorzugsweise liegt die Unterseite U2 des Abteils 5 in gleicher Höhe wie die Unterseite U des Abteils 4 der Elektronik 3. Und wie auch die Kühlkamine 8 kann zumindest einer der Kühlkamine 8a innerhalb der Primärspule 2, vorzugsweise der gemeinsame Kaminluft zuführungsabschnitt mehrerer Kühlkamine 8a, eine nach aussen hin offene Einströmöffnung 11 aufweisen. Ebenso können alle Abschnitte unter den Kaminen 8 zusammengeführt oder teilweise zusammengeführt sein.

Der Querschnitt der Kamine 8, 8a kann im Prinzip beliebige Form aufweisen. Neben dem für die Kühlkamine 8 abgebildeten rechteckigen bzw. quadratischen Querschnitt sind auch ovale, schlitzförmige oder unregelmässig geformte Querschnitte möglich. Die im Inneren der Primärspule 2 angeordneten Kühlkamine 8a werden vorzugsweise einen abgerundeten Querschnitt aufweisen.

Bevorzugt ist die Bodenfläche B über die gesamte Flächenausdehnung des Übertragerelementes eine symbolisch definierte Ebene, die durch die Stützen 13, die Führungswände 12 oder anderen Elementen als Aufstandselemente definiert ist. Durch die Stützen 13, die Führungswände 12 oder anderen Elementen sind nach unten hin nutförmig offene Passagen 14 gebildet, in welchen die Kühlluft von den Einströmöffnungen 11 zu den Kühlkaminen 8, 8a strömen kann. Auch diese Passagen 14 können einen im Prinzip beliebigen Querschnitt aufweisen. Durch geeignete Dimensionierung kann die Luftmenge für eine kontinuierliche und effiziente Kühlung gesteuert werden.

Gleichzeitig werden die Abteile 4, 5 von den Stützen 13, den Führungswänden 12 oder anderen Elementen unterstützt, was die mechanische Festigkeit und insbesondere die Überfahrfestigkeit des Übertragerelementes verbessert.

Da die Lufttemperatur am Boden im Normalfall geringer ist als an der Oberseite 6 des Übertragerelementes wird die Luft durch die Eintrittsöffnungen 11 angesaugt, durchströmt die Passagen 14 und die Kühlkamine 8, 8a und verlässt diese an der Deckfläche 6. Die abgeführte Luft kühlt beim weiteren Aufsteigen, beispielsweise zum im Betriebsfall oberhalb des Übertragerelement 1 befindlichen Empfänger des Sekundärteil des induktiven Ladesystems ab und kann somit auch kühlend auf den Empfänger des Sekundärteils wirken. Eine Kühlwirkung wird auch durch die erhöhte Geschwindigkeit der um den Empfänger des Sekundärteils strömenden Luft erzielt.

Wenn eine weitere Erhöhung des Kühlleistung der Kühlkamine 8, 8a erforderlich sein sollte, kann beispielsweise die Luftströmung durch einen oder mehrere Lüfter (nicht dargestellt) unterstützt oder erhöht werden. Die Lüfterleistung ist dabei vorzugsweise an die erzeugte Verlustleistung der Primärspule 2 und/oder der Ladeelektronik 3 angepasst.

## Patentansprüche

1. Übertragerelement eines Primärteils oder Sendeeinheit für ein System zur kontaktlosen Energieübertragung, umfassend ein Gehäuse (1) mit einer durch zumindest einige Auflagepunkte definierten Bodenfläche (B), einer der Bodenfläche (B) gegenüberliegenden Deckfläche (6), und diese beide Flächen (B, 6) verbindenden Seitenflächen (7), in oder an welchem Gehäuse (1) zumindest eine Primärspule (2), eine Elektronik (3) für die Versorgung und/oder Steuerung der oder jeder Primärspule (2) und allenfalls eine Schnittstelle zur Energieversorgung der Elektronik (3)untergebracht sind, **dadurch gekennzeichnet, dass** zumindest die Elektronik (3) in einem vorzugsweise mit Abstand oberhalb der Bodenfläche (B) angeordneten Abteil (4) des Gehäuses (1) untergebracht ist, welches Abteil (4) zumindest eine Seitenfläche (4a/4b) mit zumindest einer Reihe von Kühlkaminen (8) aufweist, die von der Deckfläche (6) im Wesentlichen bis in die Höhe der Unterseite (U) des Abteils (4), vorzugsweise noch weiter in Richtung der Bodenfläche (B), insbesondere bis zu dieser Bodenfläche (B), reichen und im Wesentlichen vertikal und parallel zueinander verlaufen.

2. Übertragerelement nach Anspruch 1, **dadurch gekennzeichnet, dass** zumindest ein Kühlkamin (8) oder zumindest eine Reihe von Kühlkaminen (8) an einer der Mitte des Gehäuses (1) zugewandten Seitenfläche (4b) des Abteils (4) von der Deckfläche (6) bis in eine Höhe zwischen der Deckfläche (6) und der Unterseite (U) des Abteils (4) reicht, sich vorzugsweise bis ganz zur Bodenfläche (B) hin erstreckt und/oder vorzugsweise durch zumindest eine Einströmöffnung versorgt wird, die sich im Bereich zwischen der Höhe der Unterseite (U) und der Bodenfläche (B) befindet.

3. Übertragerelement nach einem der Ansprüche 1 oder 2, **dadurch gekennzeichnet, dass** zumindest ein Kühlkamin (8) oder zumindest eine Reihe von Kühlkaminen (8) an einer, einer der Seitenflächen des Gehäuses (1) zugewandten Seitenfläche (4a) des Abteils (4) von der Deckfläche (6) bis in eine Höhe zwischen der Deckfläche (6) und der Unterseite (U) des Abteils (4) reicht, sich vorzugsweise bis ganz zur Bodenfläche (B) hin erstreckt und/oder vorzugsweise durch zumindest eine Einströmöffnung versorgt wird, die sich im Bereich zwischen der Höhe der Unterseite (U) und der Bodenfläche (B) befindet.

4. Übertragerelement nach einem der Ansprüche 1 bis 3, **dadurch gekennzeichnet, dass** zumindest an der der Aussenseite des Gehäuses (1) zugewandten Seitenfläche des Abteils (4a) sich zumindest eine zweite Reihe von Kühlkaminen (8) anschliesst, die vorzugsweise ebenfalls von der Deckfläche (6) im Wesentlichen bis zumindest zur Unterseite (U) des Abteils (4) reichen und im Wesentlichen vertikal und parallel zueinander sowie vorzugsweise auch parallel zu der benachbarten Reihe von Kühlkaminen (8) verlaufen.

5. Übertragerelement nach einem der Ansprüche 1 bis 4, **dadurch gekennzeichnet, dass** zumindest an der der Aussenseite des Gehäuses (1) zugewandten Seitenfläche (4a) des Abteils (4) die Kühlkamine (8) unterschiedlicher Reihen sich im Wesentlichen zwischen der Höhe der Unterseite (U) des Abteils (4) und der Bodenfläche (B) zu einem beiden Reihen gemeinsamen Zuluftabschnitt (8b) vereinigen.

6. Übertragerelement nach einem der Ansprüche 1 bis 5, **dadurch gekennzeichnet, dass** zumindest einige Kühlkamine (8) oder der gemeinsame Zuluftabschnitt (8b) mit einer nach aussen hin offenen Einströmöffnung (11) verbunden sind, gegebenenfalls durch im Wesentlichen parallel zur Bodenfläche (B) verlaufende Kaminabschnitte.

7. Übertragerelement nach einem der Ansprüche 2 bis 6, **dadurch gekennzeichnet, dass** Führungswände (12) vom untersten Bereich der am nächsten der Aussenseite des Gehäuses (1) liegenden Kühlkamine (8) bis zumindest zum untersten Bereich der benachbarten Reihe von Kühlkaminen (8) reichen, vorzugsweise bis unter die Unterseite (U) des Abteils (4), gegebenenfalls auch bis hin zu der Reihe von Kühlkaminen (8) an der der Mitte des Gehäuses (1) zugewandten Seite (4b) des Abteils (4) angeordnet sind, welche Führungswände (12) den Abstand zwischen einer Unterkante der Kühlkamine (8) bzw. der Unterseite (U) des Abteils (4) bis hin zur Bodenfläche (B) überbrücken.

8. Übertragerelement nach Anspruch 7, **dadurch gekennzeichnet, dass** die Führungswände (12) im zentralen Abschnitt des Abteils (4) die grösste Längserstreckung aufweisen und vorzugsweise bis hin zum am nächsten der Mitte des Gehäuses (1) liegenden Kühlkamin (8) der gegenüberliegenden Seite (4b) des Abteils (4) reichen, und sich die Längserstreckung der Führungswände (12) zu den Rändern des Abteils (4) umso mehr vermindert, je näher die Führungswand (12) zum Rand des Abteils (4) liegt.

9. Übertragerelement nach einem der Ansprüche 1 bis 8, **dadurch gekennzeichnet, dass** zumindest eine oder jede Seitenfläche (7) des Gehäuses (1), an der Kühlkamine (8) vorgesehen sind, zumindest über einen Teil ihrer Höhe zwischen Bodenfläche (B) und Deckfläche (6) schräg nach aussen hin abfallend verläuft und die äussere Begrenzung der an diese Seitenfläche (7) angrenzenden Kühlkamine (8) entsprechend diesem schrägen Verlauf folgt oder durch die Innenwandung des schrägen Teils der Seitenfläche gebildet ist.

10. Übertragerelement nach einem der Ansprüche 1 bis 9, **dadurch gekennzeichnet, dass** von der Unterseite (U) des Abteils (4) Stützen (13) in Richtung Bodenfläche (B) hin ausgehen, vorzugsweise eine Vielzahl von Stützbeinen mit vorzugsweise einer Querdimension in der Grösse der Dicke der Führungswände (12).

11. Übertragerelement nach einem der Ansprüche 1 bis 10, **dadurch gekennzeichnet, dass** ein Teil der Führungswände (12) von den Passagen (14) ausgehend unter dem Abteil (4) bis zumindest in die Nähe der Kühlkamine (8) an einer anderen Seite des Abteils (4) verlängert ist, unter Bildung von verbreiterten Sammel-Passagen (14a), die eine ganze Gruppe von Passagen (14) mit dem unteren Ende zumindest eines Kühlkamins (8), vorzugsweise einer Gruppe von Kühlkaminen (8), verbindet.

12. Übertragerelement nach einem der Ansprüche 1 bis 11, **dadurch gekennzeichnet, dass** das Abteil (4), insbesondere jenes für Leistungselektronik (3), entlang zumindest einer Seitenfläche des Gehäuses (1) verläuft und an zumindest einer Seitenfläche (4a/4b) zumindest eine Reihe von Kühlkaminen (8) angeordnet ist.

13. Übertragerelement nach einem der Ansprüche 1 bis 12, **dadurch gekennzeichnet, dass** auch die Primärspule (2) in einem mit Abstand oberhalb der Bodenfläche (B) angeordneten Abteil (5) des Gehäuses (1) untergebracht ist, welches Abteil (5) innerhalb der Primärspule (2) zumindest einen Kühlkamin (8a) aufweist, der von der Deckfläche (6) im Wesentlichen bis zur Unterseite (U2) des Abteils (5) reicht und im Wesentlichen vertikal verläuft und vorzugsweise von einer oder mehreren Einströmöffnung (11) gespeist wird.

14. Übertragerelement nach Anspruch 13, **dadurch gekennzeichnet, dass** eine Mehrzahl von Kühlkaminen (8c) n ihren von der Deckfläche (6) nach unten hin ausgehenden Abschnitten getrennt sind und sich im Wesentlichen vorzugsweise in Höhe der Unterseite des Abteils (5) zu einem gemeinsamen Zuluftabschnitt vereinigen, welcher vorzugsweise von einer oder mehreren Einströmöffnung (11) gespeist wird.

15. Übertragerelement nach einem der Ansprüche 13 oder 14, **dadurch gekennzeichnet, dass** die Einströmöffnungen (11) im Bereich der äusseren Seitenflächen des Gehäuses (1) angeordnet und über im Wesentlichen parallel zur Bodenfläche (B) verlaufende Passagen mit den Kühlkaminen (8c) bzw. dem gemeinsamen Zuluftabschnitt verbunden sind.
